(19) 

Europäisches
Patentamt
European
Patent Office
Office européen
des brevets

(11) **EP 4 379 617 B1**

(12) **EUROPEAN PATENT SPECIFICATION**

(45) Date of publication and mention
of the grant of the patent:
**28.01.2026 Bulletin 2026/05**

(21) Application number: **22210925.8**

(22) Date of filing: **01.12.2022**

(51) International Patent Classification (IPC):
*G06N 20/00* *(2019.01)*

(52) Cooperative Patent Classification (CPC):
**G06N 20/00**

(54) **ASSESSMENT OF INPUT-OUTPUT DATASETS USING NEIGHBORHOOD CRITERIA IN INPUT SPACE AND OUTPUT SPACE**

BEURTEILUNG VON EINGABE-AUSGABE-DATENSÄTZEN UNTER VERWENDUNG VON NACHBARSCHAFTSKRITERIEN IN EINGABERAUM UND AUSGABERAUM

ÉVALUATION D'ENSEMBLES DE DONNÉES D'ENTRÉE-SORTIE À L'AIDE DE CRITÈRES DE VOISINAGE DANS UN ESPACE D'ENTRÉE ET DANS UN ESPACE DE SORTIE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**05.06.2024 Bulletin 2024/23**

(73) Proprietor: **Siemens Mobility GmbH**
**80997 München (DE)**

(72) Inventors:
• **Sieberichs, Christian**
**52525 Heinsberg (DE)**
• **Waschulzik, Thomas**
**85354 Freising (DE)**

(74) Representative: **Siemens Patent Attorneys**
**Postfach 22 16 34**
**80506 München (DE)**

(56) References cited:
**CN-A- 114 936 528**

• **KORDOS MIROSLAW ET AL: "Improving MLP Neural Network Performance by Noise Reduction", 3 December 2013, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 133 - 144, ISBN: 978-3-540-74549-5, XP047183368**

**Description**

TECHNICAL FIELD

Various examples of the disclosure pertain to enabling and implementing assessment of a plurality of datasets, each dataset including a respective input datapoint and an associated output datapoint. A quality assessment of the plurality datasets is enabled.

TERMINOLOGY

Independent of the grammatical term usage, individuals with male, female or other gender identities are included within the term.

BACKGROUND

The number of application fields and use cases which employ machine-learning algorithms - e.g., deep neural networks, classification algorithms, regression algorithms, support vector machines, to give just a few examples - is widely increased over the past few years.

Machine-learning algorithms are trained using training data. Training data typically includes a plurality of datasets, each dataset including a respective input datapoint in an input space and an associated output datapoint in an output space. The output datapoint can act as ground truth during the training. For instance, the output datapoint could indicate a classification label (for a classification task) associated with the input datapoint. The input datapoint could be sensor data of a turbine (e.g., vibration strength, stress, pressure) and the output datapoint could indicate: "operational" or "faulty". This is, of course, only one example of a wide spectrum of possible inference tasks.

The accuracy of the inference tasks achievable by the machine-learning algorithm depends on the training data. For instance, it is conceivable that certain areas of the input space are not sampled by the training data so that inference tasks in such regions would rely on extrapolation of knowledge obtained for other areas of the input space. This can increase the uncertainty in the inference task and, typically, also the inaccuracy. Furthermore, it is conceivable that certain datasets are faulty, e.g., because the output datapoint is corrupted, e.g., indicates a wrong class for a classification task.

For instance, CN 114 936 528 A discloses a semi-supervised learning framework that utilizes supervision information contained in label data and assists structural information contained in label-free data to improve the performance of learning a machine model. The generalization capability and reliability of a measurement model is increased.

Typically, the sheer size of training data - e.g., counts of plurality of datasets used as training data can be larger than 10,000 or 100,000 or even 1,000,000 - makes it difficult to assess the respective datasets by manual inspection. It is difficult to check whether the input space is evenly sampled. It is difficult to check whether certain datasets are faulty.

This is problematic, because certain inference tasks can be relevant for safety. Examples would include control of autonomous vehicles. Here, to ensure a compliance with safety regulations, certain key properties of training data may have to be ensured prior to executing the inference task.

SUMMARY

Accordingly, there is a need for assessing plurality of datasets, e.g., training data. In particular, a need exists for techniques that enable assessment of data that includes the plurality of datasets in view of quality figures such as density of sampling of the input space, abnormalities/outliers, etc. For example, a need for assessment of training data or validation data or test data exists.

This need is met by the features of the independent claims. The features of the dependent claims define embodiments.

BRIEF DESCRIPTION OF THE DRAWINGS

FIG. 1 schematically illustrates a computing device according to various examples.

FIG. 2 schematically illustrates a plurality of datasets according to various examples.

FIG. 3 is a flowchart of a method according to various examples.

FIG. 4 schematically illustrates a plot of a cumulative fulfillment ratio of a given dataset according to various examples.

FIG. 5 schematically illustrates a plurality of datasets and a plot indicative of aggregated cumulative fulfillment ratios according to various examples.

FIG. 6 schematically illustrates a plurality of datasets and a plot indicative of aggregated cumulative fulfillment ratios according to various examples.

FIG. 7 schematically illustrates a computing architecture according to various examples.

FIGs. 8, 9, 10, and 11 illustrate an example of assessment of a plurality of datasets according to various examples.

FIG. 12 illustrates an example of assessment of a plurality of datasets according to various examples.

FIG. 13 illustrates an example of assessment of a plurality of datasets according to various examples.

FIG. 14 illustrates an example of assessment of a plurality of datasets according to various examples.

FIG. 15 illustrates an example of assessment of a plurality of datasets according to various examples.

FIG. 16 illustrates an example of assessment of a plurality of datasets according to various examples.

FIG. 17 illustrates an example of assessment of a plurality of datasets according to various examples.

FIG. 18 illustrates an example of assessment of a plurality of datasets according to various examples.

FIG. 19 illustrates an example of supervising an inference task provided by a machine-learning algorithm according to various examples.

## DETAILED DESCRIPTION OF EMBODIMENTS

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, techniques that facilitate assessment of multiple datasets will be disclosed. The datasets are input-output datasets, i.e., each dataset includes a pair of an input datapoint and an output datapoint.

Hereinafter, also techniques are disclosed that facilitate supervision of inference tasks provided by a machine-learning algorithm. Such machine-learning algorithm can be trained based on training data including multiple such datasets.

To give an example, input datapoints could be N-dimensional vectors of sensor readings. For instance, typical dimensionality of such input datapoints can be in the range of 3 to 20, or more (e.g., up to 10.000). This defines the dimensionality of the input space in which the input datapoints are arranged.

Such input datapoints - output datapoints can be associated with inference tasks, i.e., prediction of an output datapoint based on an input datapoint.

The dimensionality of the input datapoints/the input space depends on the particular use case / inference task.

Railroad tracks or a drivable area can be detected in 2-D image data acquired using a camera. Objects situated on the railroad tracks or on the driveable path can then subsequently be detected. If objects situated on the railroad tracks or on the drivable area are detected, the objects can be classified. For example, a binary classification whether an object is a person or not can be executed.

The dimensionality of the input space, the dimensionality of the output space, and the particular use case or inference task is not germane for the techniques disclosed herein. The described techniques facilitate use-case agnostic assessment of datasets. The techniques can handle various dimensionalities of input space and output space and various contents of the datapoint.

As a general rule, the plurality of datasets could define training data or validation data or test data. Training data can be used for training a machine-learning algorithm. Validation data and test data can be used for validating whether a pre-trained machine-learning algorithm correctly operates. In further detail, a model underlying the machine-learning algorithm is initially for to training data, e.g., using training employing gradient descent or variations for backpropagation. Successively, once the model of the machine-learning algorithm has been fit to the training data, the validation data can be used to provide an unbiased evaluation of the model fit; at this stage, hyperparameters may be tuned. The test data can then be used to provide a final, unbiased evaluation.

The plurality of datasets could also define inference data. Here, the input datapoints can be obtained from sensor data. Ground truth may not be available. However, a prediction of a machine-learning algorithm can be provided as part of an associated inference task, forming the output datapoints.

Example machine-learning algorithms that can be trained and/or validated and/or supervised based on such data include, but are not limited to: neural networks; deep neural networks; convolutional neural networks; support vector machines; classification machine-learning algorithms; regression machine-learning algorithms; recurrent neural networks; etc..

While various examples will be discussed hereinafter in the context of assessing training data, similarly the techniques may be readily applied to assess validation data or test data.

In some applications, the datasets that are assessed using techniques disclosed herein are used as training data for training a machine-learning algorithm. This means that the output datapoints are used as ground truth for the training, to calculate a loss value based on the output of the machine-learning algorithm in its current training state and the output datapoint. Conventional techniques for training machine-learning algorithms, e.g., back propagation for neural network algorithms, can be employed to adjust the weights of the machine-learning algorithms. The particular implementation of the training is out of scope and the techniques disclosed herein can collaborate with various training techniques, e.g., initial training, continuous training, federated learning, etc. The techniques disclosed herein rather primarily relate to the upstream assessment of the training data, e.g., whether it is suitable for the training.

Such application of assessment of training data helps to assess an accuracy of the associated machine-learning algorithm at inference. In detail, once the machine-learning algorithm has been trained, the machine-learning algorithm can be used to solve inference tasks, e.g., classification tests or regression tasks. Thus, the machine-learning algorithm can make a prediction of an output datapoint based on a corresponding input datapoint, when no ground truth is available. Again, the type of inference task is not germane for the techniques disclosed herein. The techniques can flexibly enable assessment of training data for various types of inference tasks.

Next, aspects are described that enable determining a data structure that practically enables the assessment of test data, validation data, or training data (or more generally of any example data). The data structure can alternatively or additionally used for supervising inference tasks provided by a machine-learning algorithm. The data structure structures the relationships between the input datapoints and output datapoints of the plurality of datasets, so that even for extremely large counts of datasets efficient and meaningful assessment is possible.

Consider a pair of datasets. Based on the distance in input space between the input datapoints and the distance in output space of the output datapoints, this particular pair of datasets can be associated with one of four different sets. To make this association, an input distance threshold $\delta_{in}$ as well as an output distance threshold $\delta_{out}$ is used. The distance in input space is compared to the input distance threshold; the distance in output space is compared against the output space distance threshold.

In some examples, it would also be possible that such distance thresholds are at least partly predefined.

Then, it is possible that a first neighborhood criterion defines equal pairs of input datapoints in the input space. This would mean that the distance in the input space is not larger than the input space distance threshold. Alternatively, it would also be possible that the first neighborhood criterion defines unequal pairs of input datapoints in the input space;

here, the distance of the input datapoints in the input space would be larger than the input space distance threshold.

Because the first neighborhood criterion operates in the input space, it will be referred to as input-space neighborhood criterion, hereinafter.

Likewise, for the output space, a second neighborhood criterion may define unequal pairs of output datapoints in the output space; which would correspond to the output space distance between the output datapoints being larger than the output space distance threshold. It would also be possible that the second neighborhood criterion defines equal pairs of output datapoints in the output space so that the output space distance between the two output datapoints of the pair of datasets is not larger than the output space distance threshold.

Because the second neighborhood criterion operates in the output space, it will be referred to as output-space neighborhood criterion, hereinafter.

This is summarized by the equations reproduced below. Here, $P$ notes the plurality of datasets; $P^2$ denotes the set of pairs of datasets that can be formed based on the plurality of datasets; $B_1$ and $B_2$ defines individual datasets selected from the plurality of datasets and B defines a pair of specific datasets $(B_1, B_2)$ consisting of two datasets $B_1$, $B_2$. The corresponding four sets are summarized below and correspond to the four possible combinations of the input-space neighborhood criterion (defining either equal or unequal pairs of input datapoints) and the output-space neighborhood criterion (defining either equal pairs or unequal pairs of output datapoints). ECS stands for equivalent class set and EE stands for equal equal, EU for equal unequal, UE for unequal equal, and UU for unequal unequal.

$$ECS\_EE(P) = \{B | B \in P^2 \wedge d_{RE}(B) \leq \delta_{in} \wedge d_{RA}(B) \leq \delta_{out}\}$$

$$ECS\_EU(P) = \{B | B \in P^2 \wedge d_{RE}(B) \leq \delta_{in} \wedge d_{RA}(B) > \delta_{out}\}$$

$$ECS\_UE(P) = \{B | B \in P^2 \wedge d_{RE}(B) > \delta_{in} \wedge d_{RA}(B) \leq \delta_{out}\}$$

$$ECS\_UU(P) = \{B | B \in P^2 \wedge d_{RE}(B) > \delta_{in} \wedge d_{RA}(B) > \delta_{out}\}$$

$$(1)$$

For example, a Eucledian distance metric or another distance metric may be used in Equation 1.

As a general rule, in the disclosure, distances and input space and/or the output space can be calculated on the same metric. For instance, a Euclidean distance metric may be used.

Such ECS formalism is also disclosed in Waschulzik, Thomas. Qualitätsgesicherte effiziente Entwicklung vorwärtsgerichteter künstlicher Neuronaler Netze mit uberwachtem Lernen: (QUEEN). (ISBN 9783756828838) 1999, chapter 4.5.1; here the name MR_UU, MR_UG, MR-GG, and MR_GU was used.

Various techniques disclosed herein are based on the construction of particular data structures that help to quickly and comprehensively assess multiple datasets, even where the count of the datasets is large, e.g., larger than 100 or larger than 10,000 or even larger than 1,000,000. In particular, this data structure is based on a classification of pairs of datasets in accordance with the ECS formalism described by Equation 1. The respective information is aggregated across the multiple datasets in the data structure. Information associated with each data structure can thus be quickly compared against respective information associated with the remaining data structures.

This is further based on a binning/histogram approach where a classification of each data structure that is based on the ECS formalism is assigned to one or more predetermined bins, so as to reduce complexity and make information of different data structures comparable.

Such approach is further based on the finding that in particular for high-dimensional datapoints - as are typically encountered for input space is and output spaces in practical use cases - human perception can be inherently limited. For instance, there are techniques known to map high-dimensional datapoints to lower dimensions, e.g., the Uniform Manifold Approximation and Projection (UMAP). Another example is t-SNE. However, techniques are based on the finding that such conventional projections can sometimes lead to inaccuracy or distortions of, e.g., distances between datapoints, so that an assessment based on such pre-existing solutions can lead to errors. By considering the ECS formalism, a low-dimensional representation of distances can be achieved; without distortions or falsifications introduced by conventional techniques such as UMAP.

Various techniques disclosed herein construct a data structure based on a combined consideration of neighborhood criteria defined in the input space at the output space, respectively: The data structure collects such fulfillment information for the various pairs of input and output datapoints.

It is not always required to consider all possible combinations of datasets - which would lead to extremely large sizes of the data structure and significant computational resources required for constructing the data structure.

More specifically, it would be possible to (only) consider pairs of datapoints defined by certain neighborhoods in the input space. For example, it would be possible to consider a given dataset of the plurality of datasets and then, for that dataset, determine an (ordered) sequence of predefined length, this sequence including further datasets that are progressively selected from the plurality of datasets based on a distance of their input datapoints to the input datapoint of the given dataset.

Thus, first sequence entry would correspond to the dataset that has the nearest neighbor input datapoint to the input datapoint of the given dataset; the second entry in the sequence would correspond to the dataset having the input datapoint that is the second nearest neighbor to the input datapoint of the given dataset; and so forth.

Due to the predefined length, the computational complexity of constructing the dataset and the size of the dataset is limited. At the same time, sufficient information can be collected for each dataset which is characteristic for its relationship to the other datasets.

Then, it can be checked for each pair of datasets, i.e., for the given dataset and each dataset in that sequence, whether the respective pair of input datapoints fulfills the input-space neighborhood criterion; and whether the respective pair of output datapoints fulfills the output-space neighborhood criterion, i.e., equal or unequal pairs of input datapoints as well as equal or unequal pairs of output datapoints. For each sequence entry of the sequence, it can then be possible to determine a fraction of all sequence entries up to that sequence entry that fulfill both neighborhood criteria. I.e., in other words, it is possible for each dataset of the plurality of datasets and for each sequence entry of the respective sequence to determine a respective cumulative fulfillment ratio. The cumulative fulfillment ratio is based on how many of the further datasets included in the sequence up to the respective entry cumulatively fulfill both the input-space neighborhood criterion, as well as the output-space neighborhood criterion.

There are different options available for expressing the cumulative fulfillment ratio.

For instance, the cumulative fulfillment ratio can be 100% or 0% for the first entry, depending on whether the first entry in the sequence fulfills, cumulatively, both the input-space neighborhood criterion as well as the output-space neighborhood criterion. Then, for the second entry, the cumulative fulfillment ratio can be 0%, 50% or 100%, depending on whether neither the first entry nor the second entry fulfills cumulatively the first and output-space neighborhood criterion (0%), only one of the first and second entry fulfills cumulatively the first and second neighborhood criteria (50%), or whether both the first and second sequence entry fulfill, cumulatively, the first and second neighborhood criteria (100%).

Instead of such a relative expression of the cumulative fulfillment ratio also an absolute expression would be conceivable. For instance, for each sequence entry that fulfills, cumulatively, both the first and second neighborhood criteria, the cumulative fulfillment ratio may be implemented by a fixed absolute predetermined number, e.g., 1. In such an example, the cumulative fulfillment ratio for the first entry can be either 0 or 1, depending on whether the input datapoints associated with the first sequence entry fulfill, cumulatively, the input-space and output-space neighborhood criteria; the cumulative fulfillment ratio for the second sequence entry can be either 0, 1 or 2, depending on whether the first and second sequence entry both do not define cumulatively the input-space and output-space neighborhood criteria (0), one of the sequence entries fulfills cumulatively the first and second neighborhood criteria (1), or whether both the first and second sequence entry fulfill the first and second neighborhood criteria cumulatively (2).

It is then possible to determine a data structure that stores such fulfillment information. The data structure can provide a binning of the cumulative fulfillment ratios depending on the neighborhood size (i.e., the sequence position).

The data structure is an array, e.g., an n-dimensional array with $n = 2$. A first array dimension of the data structure then resolves along the sequences that are determined for each of the plurality of datasets. While a second array dimension of the data structure resolves the cumulative fulfillment ratio. Each entry of the data structure can include a count of datapoints that are associated with a respective fulfillment ratio at the respective sequence entry defined by the position along the first array dimension and the second array dimension.

As a general rule, the term "first array dimension" or "second array dimension" is not to be construed to correspond to the specific computational / programming index assigned at source code level to the respective dimension of the data structure; but to simply denote different array dimensions (assigned arbitrary computational / programming indices). Thus, the first array dimension may also be simply termed "array dimension" and the second array dimension may also be simply termed "further array dimension".

To give a concrete example: for a position associated along the sequences that define the second nearest neighbor (i.e., second sequence entry) it could be checked how many datasets of the plurality of datasets have a cumulative fulfillment ratio of 0 (first bin), 1 (second bin), or 2 (third bin).

Use of such data structure has the advantage that it can be quickly assessed how the various datapoints are arranged with respect to each other in input space and output space. Datasets that have comparable arrangements of the input and output datapoints in the input space and in the output space can be identified, because they are in the same bin. Thus, the data structure enables efficient assessment of the plurality of datasets.

According to various examples, it would be possible that multiple such data structures are determined for different parametrizations of the input-space neighborhood criterion and/or different parameterizations of the output-space neighborhood criterion. For instance, multiple such data structures may be determined for different settings of the input space distance threshold and/or the output space distance threshold. For further illustration, multiple such data structures may be determined for two or more of: ECS_UU, ECS_UE, ECS_EU, ECS_EE.

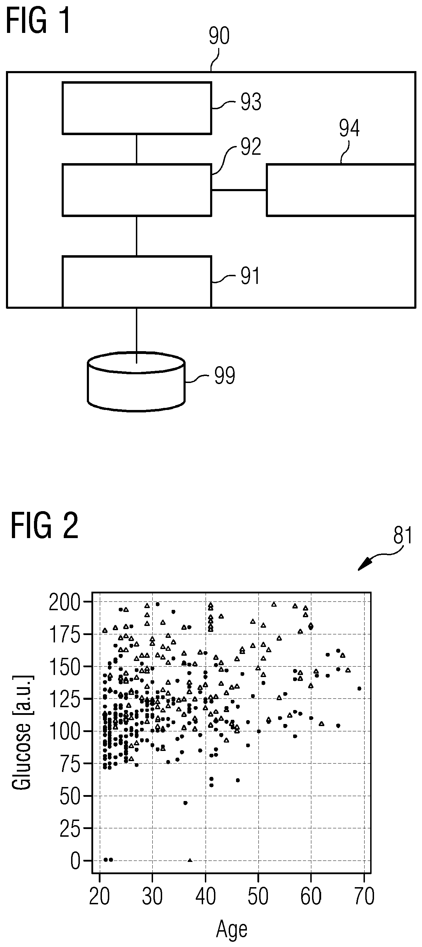

FIG. 1 schematically illustrates a computing device 90 according to various examples. The computing device 90 could be a personal computer or a server. The computing device 90 includes a processor 92 in the memory 93. The computing device 90 also includes a communication interface 91.

The processor 92 can load, via the communication interface 91, a plurality of datasets from the database 99. The plurality of datasets could also be retained in a local memory 93.

The processor 92 can load program code from the memory 93 and execute the program code. The processor, upon loading and executing the program code can perform techniques as disclosed herein, e.g.: enabling assessment of a plurality of datasets; determining a data structure based on cumulative fulfillment of neighborhood criteria defined, both, in the input space and the output space of the datasets; controlling a human machine interface (HMI) 94 to output a plot based on the data structure; access the data structure to assess the quality and/or complexity of the plurality of datasets; use the plurality of datasets as training data for training a machine-learning algorithm such as a deep neural network, support vector machine, etc.; using the machine-learning algorithm for inference; supervising an inference task provided by the machine-learning algorithm.

FIG. 2 is a schematic illustration of an example collection of datasets, e.g., forming training data. FIG. 2 is a two-dimensional plot 81 that plots two dimensions of input datapoint (here, age of a person and associated glucose concentration in the blood in arbitrary units). FIG. 2 also illustrates associated output datapoints. Circles indicate healthy individuals, while triangles indicate individuals suffering from diabetes. FIG. 2 is only one example of how a plurality of datasets might look like and various other types of datasets can be used. In particular, typically, the input datapoints would require more than two dimensions, e.g., three dimensions, ten dimensions or even more than ten dimensions.

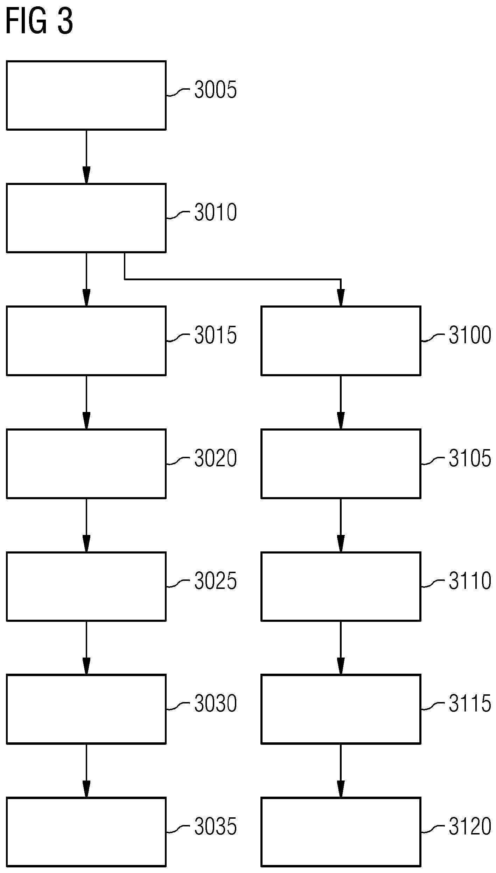

FIG. 3 is a flowchart of a method according to various examples. FIG. 3 generally pertains to assessing a plurality of datasets. The method of FIG. 3 can be used to assess the quality or complexity of a plurality of datasets. The method of FIG. 3 can also be used to supervise an inference task provided by a machine-learning algorithm.

In particular, the plurality of datasets, in the example of FIG. 3, form training data for training a classification algorithm. As a general rule, other input-output datasets - i.e., other than training data - may also be subject to the method as illustrated in FIG. 3, but for illustrative purposes such example of training data is used for explanation below.

Further, instead of classification tasks, regression tasks are possible.

The method of FIG. 3 can at least partly be executed by a processor based on program code that is loaded from a memory and executed. For instance, at least some of the boxes of FIG. 3 may be executed by the processor 92 of the computing device 90 upon loading and executing program code from the memory 93 (cf. FIG. 1).

Training data is obtained at box 3005. For instance, the training data may be loaded from a database via respective communication interface (see FIG. 1: database 99 and communication interface 91). For instance, the training data may be loaded from a local memory.

In some examples, box 3005 can also include acquisition of training data. For example, input datapoints and/or output datapoints can be acquired using suitable sensors and/or processing algorithms. The method can include controlling one or more sensors to acquire the plurality of datasets.

Acquisition of sensor data can be in accordance with an acquisition protocol. Box 3005 can include planning of the acquisition, i.e., determination of the acquisition protocol. This can help to ensure that the input space and/or the output space are appropriately sampled. This can help to ensure that typical sensors are used and would also be present in the field during inference tasks of the then trained machine-learning algorithm, e.g., exhibiting typical noise patterns or typical inaccuracies.

Obtaining the training data can also include partitioning datasets into training data and validation data and/or test data. I.e., a certain number of datasets can be available, e.g., from respective acquisition as explained above. Then these datasets can be subdivided, wherein a first set of datasets forms the training data and a second set of datasets then forms the validation data or test data.

Obtaining the training data can also include an annotation process. For instance, it would be possible that multiple input datapoints of corresponding datasets included in the training data are presented to a user, e.g., via an HMI such as the HMI 94, and the user manually assigns labels - thereby defining the output datapoints - to the input datapoints.

Beyond such supervised learning techniques also semi-supervised or unsupervised learning techniques would be possible where respective output datapoints are automatically generated (they may be pre-generated).

At box 3010, one or more data structures are determined/constructed. For instance, it would be possible to determine four data structures, a first data structure being based on the combination of a input-space neighborhood criterion and a output-space neighborhood criterion defined in input space and output space, respectively, in accordance with the $ECS_{UU}$; and/or a second data structure could be determined for a input-space neighborhood criterion and a output-space neighborhood criterion in accordance with the set $ECS_{UE}$; and/or a third data structure can be determined for $ECS_{EE}$; and/or a fourth data structure can be determined for $ECSE_U$.

I.e., the input-space neighborhood criterion can define unequal pairs of input datapoints in the input space or equal pairs of input datapoints in the input space; and likewise, the output-space neighborhood criterion can define equal pairs of output datapoints or unequal pairs of output datapoints in the output space. For all four combinations it would be possible to determine respective data structures; it would also be possible to determine only a single data structure or fewer than four data structures for selected combinations of the first and second neighborhood criteria.

"Unequal" datapoints means that the datapoints have a distance above a threshold in the respective space; "Equal" means they have a distance below the threshold.

It would also be possible to determine multiple data structures for different parameterizations of the neighborhood criteria. For instance, even for a given neighborhood criterion defining unequal or equal pairs of datapoints in either the input space or output space, it would be possible to select different distance thresholds (i.e., $\delta_{in}$ or $\delta_{out}$ in the Equation 1).

Now, considering a certain data structure that uses a certain input-space neighborhood criterion and a certain output-space neighborhood criterion. This data structure is determined as follows. First, for each dataset of the plurality of datasets, a respective sequence of a predefined length is determined. The respective sequence includes further datasets that are progressively selected from the plurality of datasets based on a distance of their input datapoints to the input datapoints of the respective dataset. I.e., a loop iterating through all datasets can be determined and for each dataset, e.g., the K-nearest neighbors could be selected in an ordered fashion.

Then, for each dataset of the plurality of datasets it is possible to determine whether the input datapoint of the respective dataset and the input datapoints of each one of the further datasets included in the respective sequence respectively fulfill the considered input-space neighborhood criterion that is defined in the input space. Likewise, for each dataset of the plurality of datasets it is possible to determine whether the output datapoint of the respective dataset and the output datapoints of each one of the further datasets included in the respective sequence respectively fulfill an output-space neighborhood criterion that is defined in the output space. Such information can then be denoted by means of the respective cumulative fulfillment ratio. This means that for each dataset of the plurality of datasets and for each sequence entry of the respective sequence it would be possible to determine a respective cumulative fulfillment ratio based on how many of the further datasets included in the sequence up to the respective entry fulfill, both, the input-space neighborhood criterion as well as the output-space neighborhood criterion. Then, the data structure can be determined. The data structure can be an array form. Each array entry can correspond to a respective bin. The bins can be defined along a first array dimension and along a second array dimension. The first array dimension the data structure can resolve the sequences determined for each one the plurality of datasets. The second array dimension of the data structure can resolve the cumulative fulfillment ratio. Then, each entry of the data structure includes a count of datapoints that are associated with the respective cumulative fulfillment ratio at the respective sequence and redefined at a position along the first array dimension and the second array dimension. I.e., it can be checked across all of the plurality of datasets how many of those datasets for a given position along the first array dimension have a corresponding cumulative fulfillment ratio associated with that bin.

It would be optionally possible that each entry of the data structure further includes an identification of the datasets that are associated with the respective cumulative fulfillment ratio at the respective sequence entry defined by the position along the first array dimension and the second array dimension. For example, a unique ID of each dataset may be stored, i.e., pointers to the respective datasets.

By means of such identification it then becomes possible to individually select or highlight those datasets that contribute to a corresponding bin in the data structure. For instance, it would be possible to select all those datasets that have a certain given cumulative fulfillment ratio (e.g., "5" or "50%") at the tenth sequence entry. This is just an example and other selection types are possible.

Thus, beyond the histogram aspect to the data structure that is given by the aggregated count of data structures that have respective cumulative fulfillment ratios at a given bin, also individual datasets can be resolved by means of such identification. Such identification of the datasets makes it possible to conveniently switch from a global assessment of the plurality of datasets to a local assessment of individual ones of the datasets. In other words, in a global view it would be possible to identify certain subsets of datasets that share certain properties by selecting the appropriate bins of the array; and then an individual assessment of the datasets can be used to identify properties that led to such binning of the datasets. For instance, quality control can be executed on a local level to check whether the labels are correctly assigned to certain datasets. It can be checked whether in relation to certain datasets further datasets will be required to augment the training data, etc.

As a general rule, various options are available for configuring the first array dimension. For instance, an increment of the first array dimension can correspond to the sequence entries of the sequences. I.e., the increment of the first dimension can be structured in accordance with natural numbers incrementing for each sequence entry, i.e., 1, 2, 3,.... Thereby, a distance in input space is not resolved by the first array dimension. The Kth-nearest-neighbor is selected when selecting the Kth-entry of the corresponding sequences.

In another scenario, it would be possible that the increment of the first array dimension corresponds to a predetermined distance offset in input space between adjacent input datapoints of the respective datasets and sequences. This means that the first array dimension is scaled along with a distance metric applied for calculating the distances in the input space. Thus, a distance measure between the considered input datapoints is considered when binning in the data structure. It has been found that such distance measure applied to the first array dimension can help to more meaningful assessment of the plurality of datasets.

According to various examples, it would be possible to save the one or more data structures for later use. It would also be possible, alternatively or additionally, to commence at box 3015 and/or box 3100. Box 3015 (and the following boxes) are, accordingly, optional boxes. Boxes 3015-3035 boxes facilitate an assessment of the quality or complexity of the training data based on the one or more data structures that have been previously determined in box 3010. Here, the data structure is accessed, e.g., by plotting, comparing entries, checking entries, etc.. The quality or complexity of the training data can be manually assessed (in an example not falling within the scope of the claims) and/or automatically assessed. Thus boxes 3015 and following may optionally involve user actions. Box 3100 and following enable supervision of inference tasks provided by a machine-learning algorithm based on the data structure.

For a manual assessment of the training data, it is helpful to access the data structure to plot the data structure, at box 3015. It is possible to determine a plot of the data structure. Here, a contrast of plot values of the plot is associated with the count of the datapoints. For instance, the more datasets are counted in a certain bin, the darker a respective plot value can appear. The first axis of the plot can resolve the first array dimension and the second axis of the plot can resolve the second array dimension. The plot can then be output via a user interface, e.g., the HMI 94 of the computing device 90.

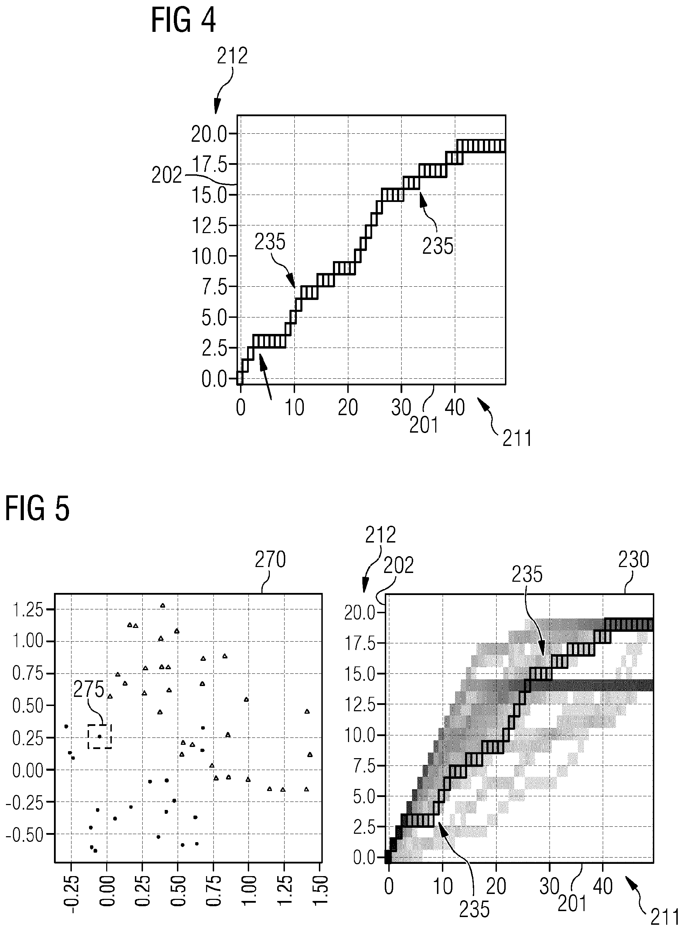

Examples of such plot are provided and discussed in connection with FIG. 4 in FIG. 5.

FIG. 4 illustrates the cumulative fulfillment ratio 212 (incremented by "1" for each fulfillment of both input-space neighborhood criterion and output-space neighborhood criterion; the cumulative fulfillment ratio 212 is resolved by the second plot dimension 202, Y-axis) determined for a sequence (resolved along the first array dimension, first plot dimension 201, X axis) of a given datapoint. The respective trace 235 is shown. An increment of the first axis of the plot 201 - corresponding with the first array dimension corresponds to the sequence entries in the corresponding sequence. The sequence has 50 entries in the illustrated examples (but may have more or fewer entries in other examples).

As can be seen from FIG. 4, for the first three sequence entries, the cumulative fulfillment ratio 212 increases (from 0 to 1 and then to 2) I.e., for the third nearest neighbor input datapoint in input space the following holds true: the first nearest neighbor, the second nearest neighbor, as well as the third nearest neighbor input datapoints are all associated with datasets that each fulfill cumulatively the input-space neighborhood criterion as well as the output-space neighborhood criterion with respect to the given dataset for which the sequence is determined.

Then, illustrated by the arrow in FIG. 4, for the next five entries of the sequence (sequence entries 4 to 9), the cumulative fulfillment ratio 212 does not increase further (i.e., remains at the value 3). This means that for the sequence entries 4 through 9, there is no cumulative fulfillment of, both, the input space neighborhood criterion as well as the output space neighborhood criterion.

Such information regarding the cumulative fulfillment ratio 212 can be gathered for all datasets in the corresponding data structure. It would then also be possible to plot aggregated counts of such cumulative fulfillment ratio for each entry of the data structure. This is illustrated in the plot 230 in FIG. 5.

In FIG. 5, the plot value depends on the count of datasets that have corresponding cumulative fulfillment ratios 212 at each bin of the data structure. Darker (lighter) contrast corresponds to a higher (smaller) count.

As will be appreciated, plot 230 accordingly corresponds to a histogram depiction since it does not resolve between individual datasets. Plot 230 facilitates a global assessment of the training data across all datasets. Nonetheless, the data structure can include information that enables to identify the datasets that contribute to a particular contrast of a given plot value. Thus, it would be possible to identify a subset of the datasets by selecting parts of the plot and then present datasets in the subset to the user via the user interface.

Note that a gamma correction as known in the prior art may be applied to better discriminate plot values.

Such local assessment of individual datasets can be done as part of analyzing the plurality of datasets at box 3020 in FIG. 3. For instance, as illustrated in FIG. 5, the plot 230 may be accompanied (e.g., output next to each other via the GUI) by a further plot 270 that illustrates position of the various input datapoints of the datasets in the input space. A two-dimensional representation of their positions is used and may be determined, e.g., using a dimensionality reduction algorithm (such as UMAP or t-SNE) if the dimensionality of the input space is larger than 2. Illustrated in FIG. 5 is also the output datapoint, i.e., a class label associated with each dataset. Circles correspond to a first class and triangles correspond to a second class. For instance, it would be possible to select, in the plot 270, by hovering with the mouse at a certain position, a certain dataset - this dataset can then be highlighted, e.g., using a bounding box 275. Then, the corresponding trace 235 of the cumulative fulfillment ratio 212 of that dataset can be highlighted in the plot 230 (also cf. FIG. 4). As will be appreciated, this enables an intuitive interaction between global and local assessment of the training data.

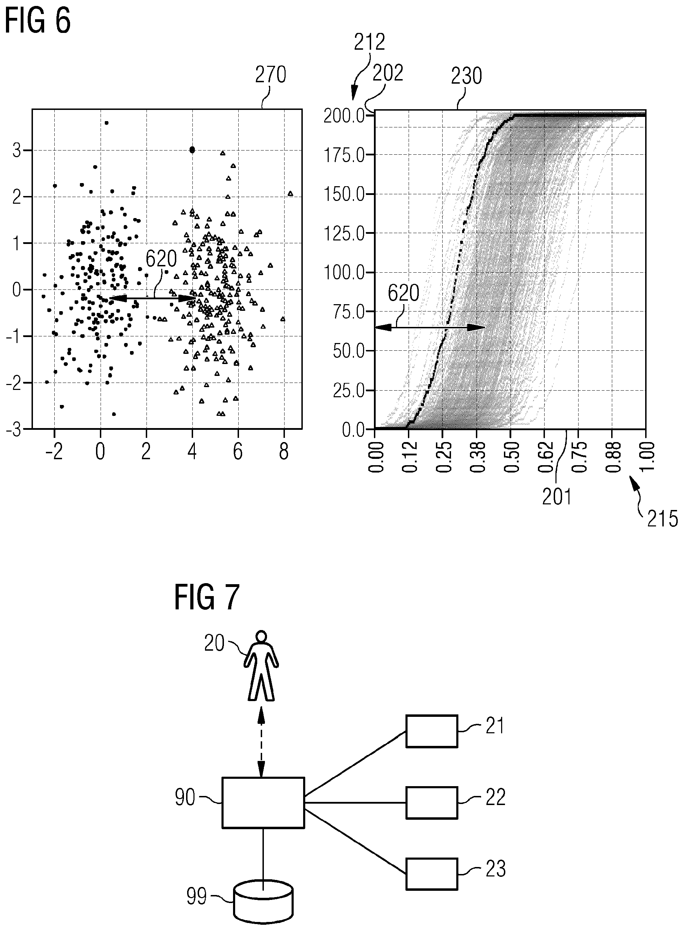

FIG. 6 illustrates a further instance of the plot 230. Here, the first plot axis 201 is scaled with the distance in the input space in accordance with a correspondingly configured first array dimension 215. Such configuration of the first array dimension 215 is helpful for certain types of distributions of datasets - as illustrated in the plot 270 - with well-defined class boundaries (different classes are again discriminated by circles and triangles). The characteristic distance 620 can be estimated.

Referring again to FIG. 3, once the training data has been analyzed at box 3020, it would be possible to refine the training data at optional box 3025. For instance, certain datasets may be removed from the training data, e.g., because they are faulty. It would also be possible to acquire further datasets, e.g., for areas where only sparse sampling of the input space is available. An annotation process may be guided accordingly.

Another option for refining the training data would be based on adjusting a partitioning into training data and validation/test data performed at box 3005. I.e., where a collection of datasets has been partitioned into training data and validation/test data, this partitioning can be adjusted. For example, it would be possible to compare the data structure determined for the training data with a corresponding data structure determined for the validation data/test data (i.e., the preceding boxes can be executed also for the validation/test data, to obtain a similar data structure). If significant deviations between the first data structure determined for the training data and the second data structure determined for the validation data/test data are detected, then, the partition is faulty. This is because the training data does not adequately sample input space/output space dependencies to be validated by the validation or test data. Such comparison between the first and second data structure can be executed on multiple levels. For example, a local comparison can be executed for individual bins. Deviations between the entries associated with certain bins can be compared to a predetermined threshold. Further, a global comparison can be executed across multiple bins, e.g., using techniques of descriptive statistics.

As a further measure of refining the training data at box 3025, further datasets could be acquired using different sensors. Thus, the measurement principle underlying the acquisition of the datasets may be varied. A data acquisition plan can be adjusted. Such techniques are helpful where certain deficiencies in the test data are detected based on the analysis, such deficiencies being rooted in the underlying measurement/data acquisition. To give a concrete example: for instance, it would be possible to detect high complexity of the training data, i.e., a small change in the position in the input space can result in a significant change in the position in the output space. Thus, a prediction boundary in the input space can be blurry or very narrow. Then, it can be judged that such high complexity of the training data prevents robust inference. To mitigate this, the construction of the datasets can be re-configured and new training data can be acquired for the new configuration of the datasets. For instance, one or more features can be added to the datasets, e.g., further sensor data can be included (this would increase the dimensionality of the datasets). It would also be possible to reconfigure the types of sensors used for the acquisition of the datasets, e.g., use a sensor having lower noise level, rearrange an arrangement of the sensors in a scene, etc. Then, at optional box 3030, upon assessing the quality of the training data, it is possible to train the classification algorithm based on the (optionally refined) training data.

At box 3035 it would then be optionally possible to use the machine learning algorithm for solving inference tasks based on the training. Based on such inference tasks, a machine may be controlled.

Above, with respect to box 3015 through box 3035 techniques have been disclosed that facilitate assessment of a collection of datasets, e.g., forming training data. Such assessment can be executed prior to training or as part of the overall training process of a machine-learning algorithm. According to some examples, it is also possible to employ the data structure as part of an inference process. This is illustrated next in connection with box 3100 and following.

At box 3100 an input datapoint for which an inference is to be made is obtained. The input datapoint can thus be referred to as inference input datapoint.

A machine-learning algorithm determines, at box 3105, an inference output datapoint based on the input datapoint. The machine-learning algorithm is pre-trained using a collection of datasets forming training data, e.g., based on the training data obtained at box 3005.

It is then possible, using the disclosed techniques, to test whether an inference task provided by the machine-learning algorithm is reliable or unreliable for the inference input datapoint. For instance, if the inference task is judged to be unreliable, the inference output datapoint can be marked as unreliable. For instance, if the inference task provided by the machine-learning algorithm is used to implement controller functionality for a technical system, the technical system could be transitioned into a safe state. A warning message could be output.

Supervision of the machine-learning algorithm is implemented based on the data structure determined at box 3010.

In detail, it is possible to retain a representation of the training data (cf. box 3005) as well as the data structure determined based on the training data (box 3010). Then, based on the inference input datapoint and the inference output datapoint, it is possible to determine the trace of cumulative fulfillment ratios for neighborhoods of the inference input datapoint as previously explained in connection with box 3010. This is done at box 3110. I.e., as part of box 3110, a sequence of a predefined length is determined that includes further datasets (e.g., of the training data) progressively selected from the training data based on a distance of the input datapoints to the inference input datapoint. Next, it is determined whether the inference input datapoint and input datapoints of each one of the further datasets included in the sequence respectively fulfill an input-space neighborhood criterion. It is also possible to determine whether the inference in output datapoint in the output datapoints of each one of the further datasets respectively fulfill an output-space neighborhood criterion. Then, for each sequence entry of the sequence associated with the inference input datapoint, it is possible to determine a cumulative fulfillment ratio based on how many of the further datasets included in the sequence up to the respective entry fulfill both the input-space neighborhood criterion as well as the output-space neighborhood criterion.

Then, at box 3115, a comparison between the trace of the cumulative fulfillment ratios of the inference input datapoint in the inference output datapoint with respect to the training data and the previously determined data structures associated with the training data is executed.

At box 3120, based on the comparison, the inference output datapoint can be selectively marked as reliable or unreliable.

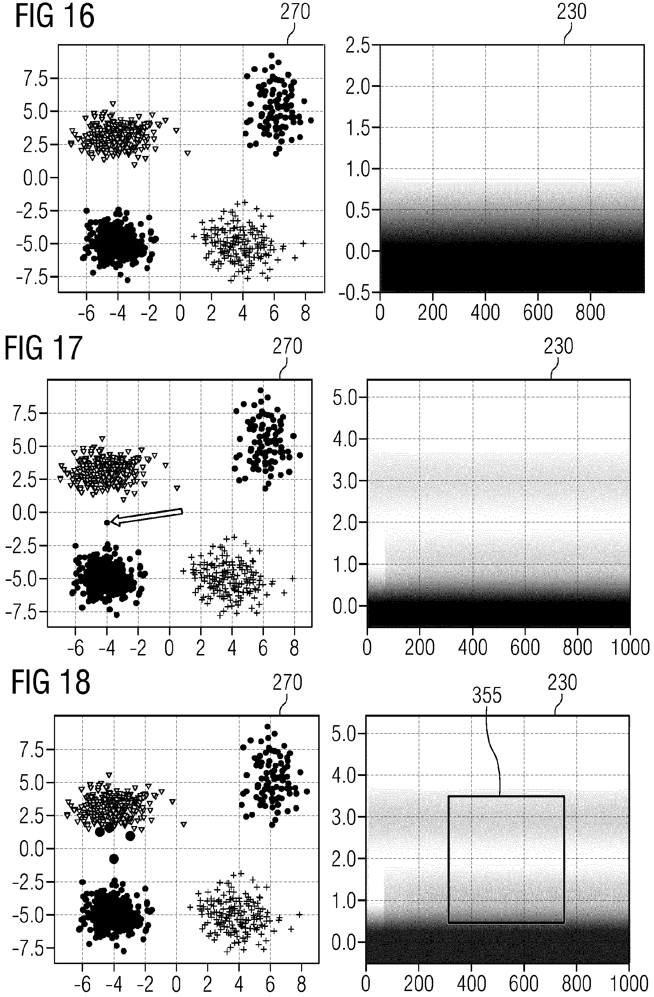

As a general rule, there are various options conceivable for implementing such comparison. On a general level, the data structure is obtained from a superposition of the traces determined for each dataset of the training data. I.e., the data structure specifies the count of datapoints that are associated with the respective cumulative fulfillment ratio to a certain sequence entry. Thus, it can be checked whether the trace determined for the inference input datapoint and the inference output datapoint matches with the patterns included in the array data structure. A match is indicative of the inference input datapoint/ inference output datapoint behaving similar to input datapoint/output datapoints present in the training data; so that it can be assumed that the inference is reliable. Deviations between the trace of the inference input datapoint and the inference output datapoint are indicative of a novel behavior not observed in the training data so that the inference can be assumed to be unreliable. Some examples will be explained later in connection with FIG. 16 and FIG. 17.

Next, some specific details of possible assessments to be executed as part of box 3020 will be disclosed. For instance, an assessment of complexity of the training data can be executed. This can include determining clusters of input datapoints in input space. This can include determining highly complex inference tasks, e.g., where input datapoints are situated closely together in the input space but have significantly deviating output datapoints, i.e., equal pairs of input datapoints and unequal pairs of output datapoints are assessed. This can also include detection of regions in the input space that correspond to superimposed output datapoints. For instance, input datapoints that are equal in input space can be associated with unequal output datapoints. Two or more classes for a classification task can be superimposed. Assessment of the complexity of the training data can also include assessing the "change behavior" of the underlying model assumption of mapping input space to output space, i.e., how a certain change of the position in the input space results in a change of the position in the output space. Assessing the complexity can also include determining regions in input space that correspond to simple inference tasks. For instance, it would be possible to determine regions in input space where all corresponding output datapoints are equal in output space, depending on the respective output neighborhood criterion. Such simple inference tasks cannot be associated with a linear mapping from input space to output space, e.g., for regression tasks. Assessing the complexity can also include determining inherent noise in the training data, e.g., leading to statistical fluctuation of the position in input space and/or the position in output space. Likewise, periodic behavior of the input datapoints and/or the output datapoints can be identified when assessing the complexity of the training data. Borders in between different output classes can be identified when assessing the complexity of the training data.

Alternatively or additionally to assessment of the complexity of the training data, it would also be possible to assess the quality of the training data. For instance, outliers may be determined. Inconsistent datasets can be identified. Noise associated with the acquisition of data underlying the input datapoints and/or the output datapoints can be identified. Continuity of the position in output spaces depending on the position in input space can be assessed. It can be checked whether the input space is evenly sampled. Wrong classifications, i.e., erroneous output datapoints can be identified. Unequal sampling of the output space can be identified.

FIG. 7 illustrates a computer architecture that can be used according to various examples. The compute architecture illustrates the computing device 90 in the database 99. Also illustrated is a user 20 that can interact with the computing device 90, via the HMI 94 (not illustrated in FIG. 7).

The computing device 90 has the task of constructing the data structure (cf. FIG. 3: box 3010). Also, the computing device 90 then accesses the data structure to enable assessment of the datasets underlying the construction of the data structure (cf. FIG. 3, box 3015), e.g., quality assessment and/or complexity assessment. Such assessment can be automatically implemented, e.g., by certain predetermined scripts. It would also be possible that such assessment is based on user interaction, cf. user 20 that can interact with the computing device 90 via the HMI 94.

The computing device 90 can also have the task of training a machine-learning algorithm based on training data formed by a plurality of datasets, e.g., responsive to ensuring quality of the plurality of training datasets. Such training could also be offloaded to one or more other computing devices.

Once the machine-learning algorithm has been trained (cf. FIG. 3: box 3030), inference tasks can be solved using the machine-learning algorithm. For this, the machine-learning algorithm can be deployed to multiple field devices 21-23.

Next, concrete examples for such assessment of a plurality of training datasets as outlined above will be presented next.

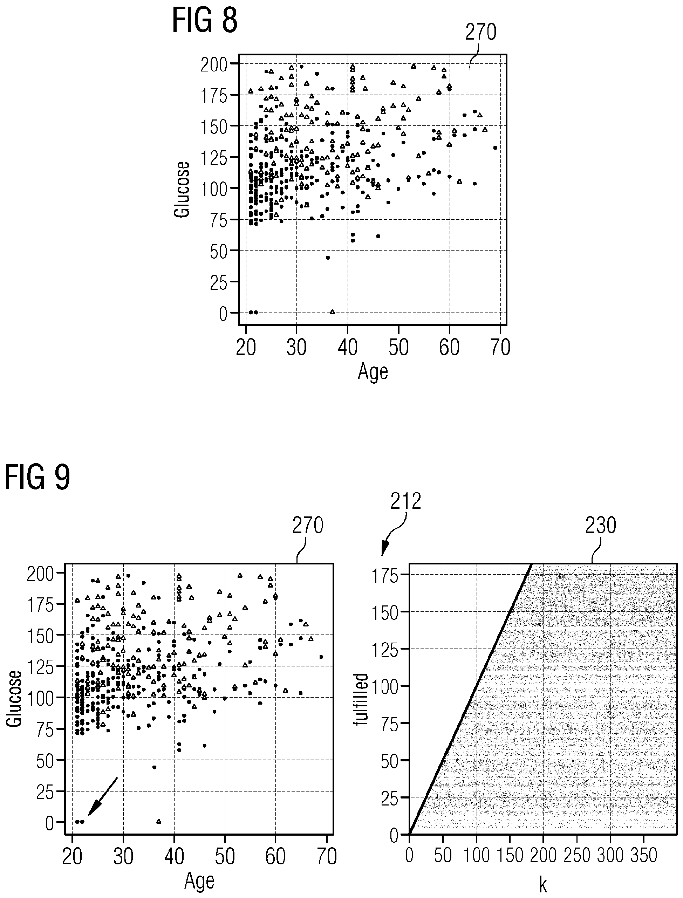

First, in connection with FIG. 8, FIG. 9, FIG. 10, and FIG. 11, an example associated with the distribution of input datapoints in the input space is explained. Where a plurality of datasets is investigated in the input space, one criterion of quality assessment corresponds to varying sampling density. The distribution of input datapoints and the count of input datapoints per area within the input space can have a significant impact regarding the accuracy of inference tasks achieved by a machine-learning system. In an ideal case, the input datapoints should homogeneously sample the input space. I.e., the density of input datapoints should be approximately constant across the input space. For certain regions of the input space, it can be helpful to increase the density of the input datapoints, e.g., at regions where strong differences are observed in the output datapoints. Gaps in the input space are usually to be avoided. Gaps in the input space can lead to a machine-learning algorithm to lack corresponding ground truth for training, which can reduce the associated accuracy of the inference. Beyond such gaps in the input space, also an uneven sampling density of the input space is to be avoided. This can be helpful to avoid biasing the machine learning algorithm during the training.

All such aspects regarding the sampling density of the input space can be investigated in a quality assessment of the training data based on data structures and plots as disclosed herein.

Hereinafter, an example strategy for assessing such characteristics of the training data will be explained in connection with a training data illustrated in the plot 270 of FIG. 8. Here, the input space is two-dimensional (age and glucose concentration) and the output space is one-dimensional (diabetes or no diabetes). The output datapoints are encoded using circles and triangles in FIG. 8.

Then, the input-space neighborhood criterion is configured to define equal pairs of input datapoints in the input space and the output-space neighborhood criterion defines equal pairs of output datapoints in output space. For instance, the input space distance threshold can be set to 0.1 and the output space distance threshold can be set to 1.0. Such distance thresholds can be relatively defined. For instance, the maximum distance for the largest neighborhood can be considered. Then, this maximum distance can correspond to a distance threshold of 1.0 and a distance threshold of 0.1 would correspond to 10% of that maximum distance. The maximum distance can be determined separately for the input space in the output space. Based on this, the plot 230 is illustrated in FIG. 9. Both traces that have the steepest incline in the plot 230 correspond to datasets that have most local neighbors in, both, the input space and the output space. Those traces in the plot 230 having the smallest inclination have the fewest local neighbors, both, input space and output space.

As illustrated in FIG. 9, for each dataset there are between 5 and approximately 108 neighbors in the input space (given the respectively configured input space distance threshold of 0.1). This is a significant spread which would cause training of the machine learning algorithm to predict diabetes or no diabetes to be underrepresented for areas in the input space only sparsely sampled. To improve the quality of the training data, it is advisable to check those regions of the input space that are only sparsely sampled. For instance, these could be erroneous data samples, e.g., wrongly indicating age or glucose. This would explain why there are only few neighbors in the direct neighborhood. For instance, in the illustrated training data, there are two datasets (labeled with the arrow in FIG. 9 in plot 270 that have a glucose concentration of 0). These could be outliers.

Furthermore, it can be checked whether additional datasets can be obtained in the sparsely sampled regions of the input space.

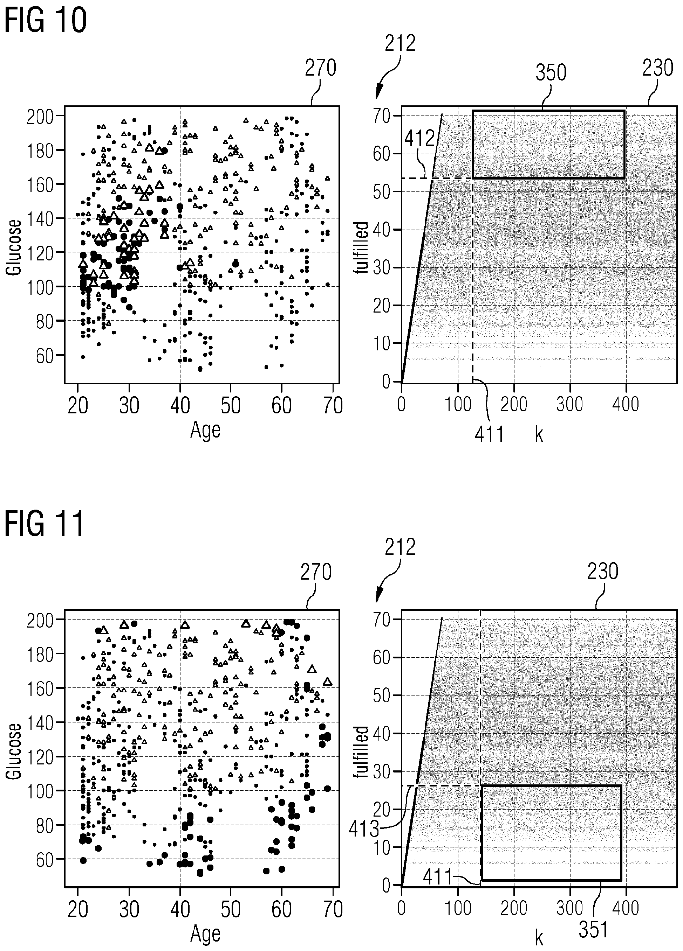

An adjusted training dataset - that has been augmented (cf. FIG. 3: box 3025) - is illustrated in the plot 270 of FIG. 10. Also, in FIG. 10, the associated plot 230 is illustrated.

In FIG. 10, a part 350 of the plot 230 is selected. Thereby, a subset of datasets is identified. The subset includes such datasets that associated with cumulative fulfillment ratios 212 indicating a high count of close neighbors. These datasets of the subset are highlighted (thick symbols) in the plot 270. Likewise, in FIG. 11, another part 351 of the plot 230 is selected that corresponds to datasets that have only few neighbors. These input data are highlighted in the plot 270 of the FIG. 11 (thick symbols).

The data structure in FIG. 10 and FIG. 11 underlying the respective plots 230 has been constructed in both cases using an input space neighborhood criterion that defines equal pairs of input datapoints in the input space and an output space neighborhood criterion that also defines equal pairs of output datapoints in the output data space ($ECS_{EE}$).

Thus, as will be appreciated from FIG. 8, FIG. 9, FIG. 10, and FIG. 11 it is possible to assess the training data to identify one or more low-density datasets amongst the datasets of the training data and/or to identify one or more high-density datasets amongst the datasets of the training data. The low-density datasets are identified by selecting all entries of the aggregated data structure having a fulfillment ratio below a certain threshold (cf. FIG. 11: threshold 413) for sequences larger than a predetermined length (cf. FIG. 11: predetermined length 411). On the other hand, the one or more high-density datasets are identified by selecting all entries of the aggregated data structure having a cumulative fulfillment ratio that is above a certain predetermined threshold (see FIG. 10: predetermined threshold 412) for sequences larger than a certain predetermined length (cf. FIG. 10: predetermined length 411; note that for the assessment in FIG. 10 and FIG. 11 different length thresholds could be used, even though this is not illustrated).

Next, an example is described in connection with the assessment of the training data to identify outlier datasets. There are multiple reasons for outlier datasets. For instance, there can be noise of the acquired datasets, e.g., noise in the input data or the output datapoints. Here, the transition between an outlier datapoint in a faulty datapoint is blurry. This is why the tools of assessment of the training data to identify outlier datasets can also be applied to identifying faulty datasets. To identify outlier datasets, the input space neighborhood criterion can define unequal pairs of input datapoints in the input space while the output space neighborhood criterion defines equal pairs of output datapoints in the output space ($ECS_{UE}$).

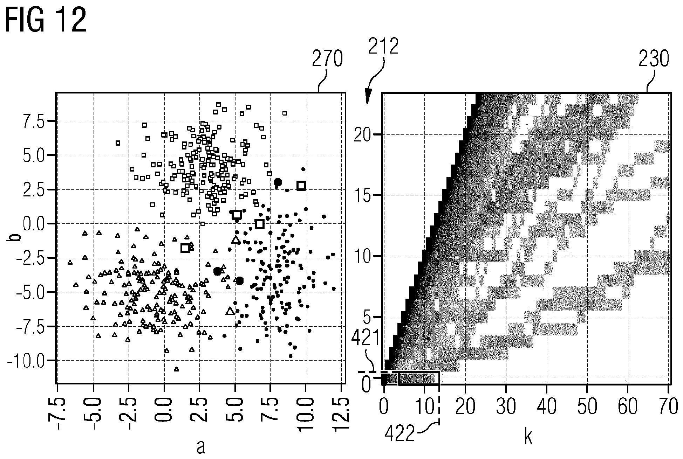

For instance, the input space distance threshold can be set to 0.0, while the output space distance threshold can be set to 0.15 for regression task and to 0.0 for classification tasks. Illustrated in FIG. 12 is the identification of the outlier dataset by identifying all entries of the data structure having a cumulative fulfillment ratio below a predetermined threshold 421 for sequences having a length up to a predetermined length threshold 422. The respective datasets are highlighted in the plot 270 in FIG. 12 (thick symbols).

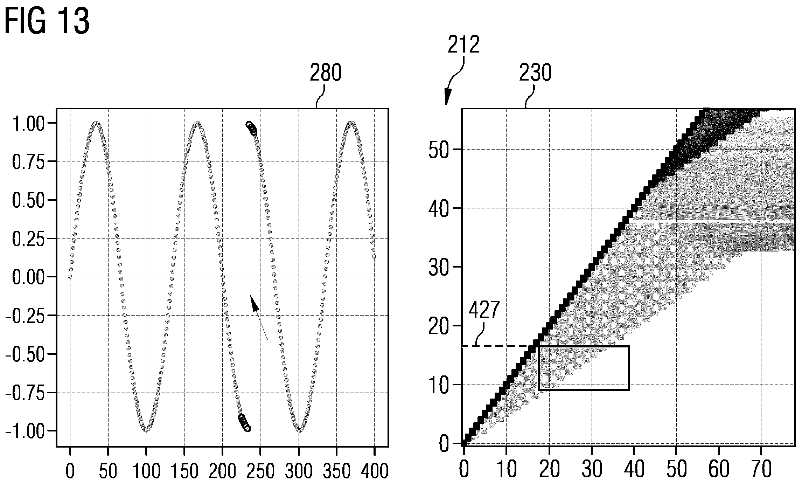

Next, in connection with FIG. 13, an example of a regression task that models a mapping between the input space and the output space will be explained. First, in plot 280, the dependency of the output position on the input position is plotted. I.e., the Y-axis resolves the position of the output datapoints in the output space; while the X-axis resolves the position of the input datapoints of the datasets in the input space.

As is apparent from plot 280, there is a mapping between the input space and the output space. However, there is a discontinuity (marked with the arrow in FIG. 13). To identify such discontinuities of the mapping, it is possible to consider the input space neighborhood criterion that defines unequal pairs of input datapoints in the input space and the output space neighborhood criterion that defines equal pairs of the output datapoints in the output space ($ECS_{UE}$). The input space distance threshold can be set to 0.0 and the output space distance threshold can be set to 0.1. Then, the plot 230 of the cumulative fulfillment ratio 212 is a function of the sequence length as illustrated in FIG. 13 is obtained. Again, a certain part (highlighted in the plot 230) can be selected. As will be appreciated, the cumulative fulfillment ratio is calculated so that the maximum increase from sequence entry to sequence entry is 1. Where the cumulative fulfillment ratio does not increase by 1, this is indicative of a discontinuity. The corresponding part of the plot 230 selects corresponding datapoints which are also highlighted in the plot 280 (thick symbols). Thus, all datasets having a cumulative fulfillment ratio below a predetermined threshold 427 are selected.

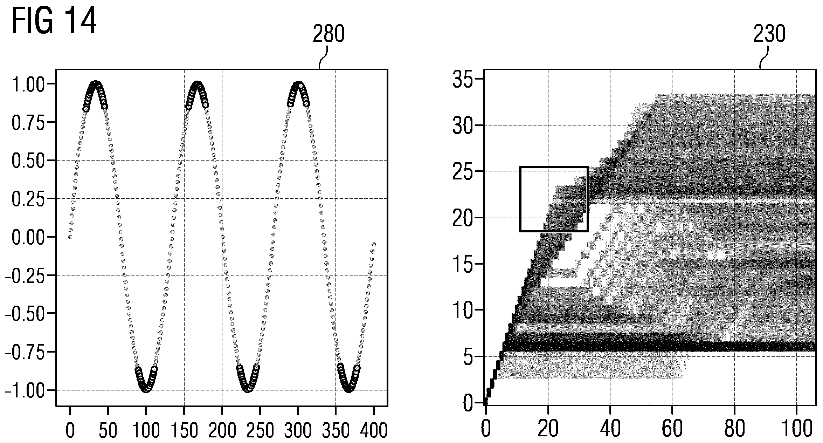

Next, in connection with FIG. 14, techniques are disclosed that facilitate selecting input datapoints for a regression task that lie in the region of the input space that it is characterized by a small change range of the mapping, i.e., comparatively close output datapoints for those input datapoints in the designated regions. Here, the input space neighborhood criterion defines unequal pairs of input datapoints in the input space while the output space neighborhood criterion defines equal pairs of output datapoints in the output space ($ECS_{UE}$). The input space distance threshold can be set to 0.0 while the output space distance threshold can be set, e.g., in the range from 0.05 to 0.1. Using these settings for the determination of the cumulative fulfillment ratio, most datasets will have an output datapoint that is closer to another output datapoint of the nearest neighbor than the output space distance threshold. The smaller the change of the position of the output datapoint in the output space, the more nearest neighbors can be found within the output space distance threshold. Thus, the trace of the cumulative fulfillment ratio of a given dataset increases steeply within an area with small changes of the mapping between input space and output space, for small lengths of the considered sequence. The traces of the cumulative fulfillment ratio in regions having significant changes, on the other hand, hardly increase for small sequence lengths, and if so, only briefly. By selecting a part (highlighted in FIG. 14) of the plot 230 of those traces that increase the most, the datasets can be identified that are subject to smallest changes between input and output datapoints, respectively. These datapoints are highlighted in the plot 280 of FIG. 14. Thus, as will be appreciated to identify datasets at low-change regimes of the mapping between input space and output space for a regression task, it is possible to select those entries in the aggregated data structure that have the strongest increase in the cumulative fulfillment ratio from entry to entry of the respective sequence.

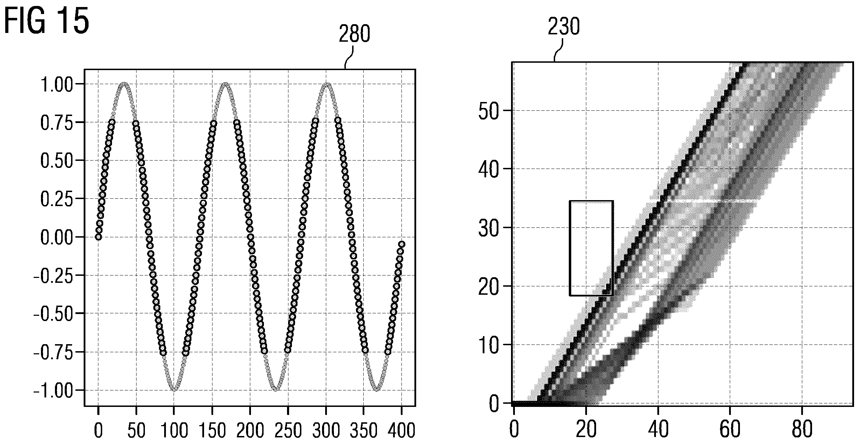

Likewise, as illustrated in FIG. 15, it would be possible to select entries in the aggregated data structure that have strongest increase of the cumulative fulfillment ratio for a configuration where the input space neighborhood criterion defines unequal pairs of input datapoints and the output space neighborhood criterion also defines unequal pairs of output datapoints in the output space. Then, the one or more datasets at a high-change regimes of the mapping are again identified by selecting those entries in the aggregated data structure to have the strongest increase in the cumulative fulfillment ratio. This is illustrated by the respective highlighted part in the plot 230 of FIG. 15; and these datapoints are highlighted in the plot 280 of FIG. 15.

Next, in connection with FIG. 16, FIG. 17 and FIG. 18, techniques are disclosed that facilitate determining out of distribution datapoints based on a data structure that is determined as explained above. For instance, for a classification task such datasets can be identified that include input datapoints that are below a certain minimum distance but, at the same time, have output datapoints that implement a change of the output class.

The predetermined minimum distance can be the minimum distance between all possible pairs of input datapoints for the plurality of datasets forming training data. This corresponds to the input space threshold discussed above in connection with Eq. 1.

The corresponding output space threshold - that is also discussed above in connection with Eq. 1 - can be set to equate to the maximum allowed change of the output datapoint for a change of the input datapoint corresponding to the input space distance threshold. For instance, for a classification task, it can be required that the output class remains the same for any change in the input space that is below the input space distance threshold: Then, the output space distance threshold is set to 0.0. On the other hand, in another example, if a change of the output datapoint of not more than 0.1 is allowed, the output space distance threshold is set to 0.1.

Then, the input-space neighborhood criterion is configured to correspond to equal pairs of input datapoints in the input space and the output-space neighborhood criterion is configured to define unequal pairs of output datapoints in the output space. I.e., each ECS_EU can be determined, cf. Eq. 1. For this, the cumulative fulfillment ratio only increases for increasing neighborhoods if the output datapoint exhibits a change beyond the output space distance threshold. This means that any increasing trace of cumulative fulfillment ratios can be associated with datasets that are out-of-distribution.

For example, this is illustrated in FIG. 16. Here, for all datasets the cumulative fulfillment ratio is 0, see plot 230; and the arrangement of the datasets in the input space provided in plot 270 (again, in FIG. 16, plot 270 the shape of the symbols indicates the output class). Then, in FIG. 17 a single additional datapoint is added to the dataset, marked by the arrow in plot 270. This causes changes in the plot 207 (cf. FIG. 17 vs. FIG. 16). Visible in plot 230 is a deviation of the cumulative fulfillment ratios, i.e., there are certain cumulative fulfillment ratios that are different than zero, caused by the added datapoint.

Then, as illustrated in FIG. 18, it would be possible to select a part 355 of the plot 230 that corresponds to cumulative fulfillment ratios that a larger than 0; the corresponding datasets of the respective subset are highlighted in the plot 270. This is the outlier datapoint away from the cluster; as well as some "circle" datapoints next to "triangle" datapoints.

For instance, responsive to detecting one or more datapoints that are out-of-distribution, a warning could be output. This can happen during training of the machine-learning algorithm. The out-of-distribution dataset can be passed on to an annotation interface, for inspection by a user.

Above, various examples have been discussed in connection with FIG. 8 to FIG. 18 how to assess a collection of datasets, e.g., forming training data. Typically, such assessment can be executed prior to training a machine-learning algorithm. Such techniques can also be employed for assessing validation data or tests data. Respective techniques can be employed in connection with box 3025 of the method of FIG. 3.

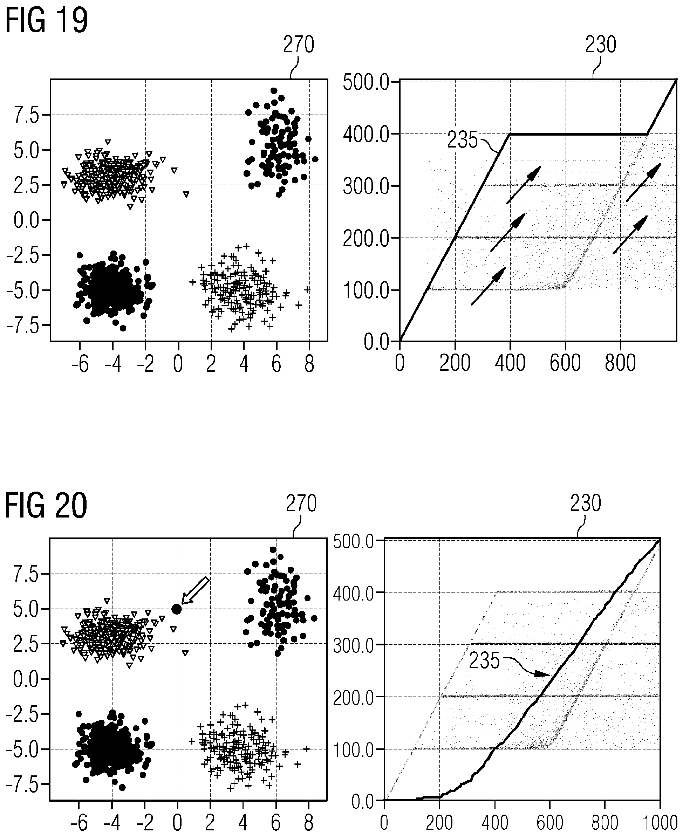

Next, in connection with FIG. 19, a scenario will be explained how to identify, at inference, unreliable predictions made by a machine-learning algorithm that has been previously trained based on training data. Such techniques correspond to box 3100-3120.

FIG. 19 shows the plot 230 of the data structure for an input neighborhood criterion defining equal pairs of input datapoints; and an output neighborhood criterion also defining equal pairs of output datapoints. The plot 230 having characteristic patterns is obtained ("white regions" forming between well-defined dark branches; these "white regions" are marked by the arrows); the branches are indicative of the well-separated clusters of input datapoints corresponding to different output datapoints, as graphically illustrated by the plots 270 of FIG. 19. Also illustrated is the trace 235 determined for a further dataset, overlayed to the plot 230 of the data structure. This trace can be determined as explained above in connection with box 3110, specifically at inference for an inference input datapoint and an associated prediction of the machine-learning algorithm for inference output datapoint. As is apparent in FIG. 19, a comparison between the plot 230 of the data structure of the underlying training data and the trace yields that the trace follows the patterns of the plot of the data structure (the trace 235 progresses along the branches between the "white regions"); accordingly, the trace 235 matches corresponding traces of the cumulative fulfillment ratios of datasets included in the training data. This is different for the scenario FIG. 20; here, a different inference input datapoint is considered against the same training data. The trace 235 of this inference input datapoint significantly deviates from the traces included in the data structure for datasets of the training data. Such deviation could then result in marking the inference output datapoint that led to the trace 235 in FIG. 20 as unreliable (while the output datapoint of the trace 235 in FIG. 19 would be marked as reliable). Respective techniques have been discussed above in connection with box 3120 in FIG. 3.

Beyond such a visual comparison of the trace 235 to patterns in plot of the data structure, this comparison can also be automatically implemented. A comparison between the entries of the data structure matching to the cumulative fulfillment ratio of the trace determined for the inference input datapoint / inference output datapoint can be considered. For instance, it would be possible to require that the cumulative fulfillment ratio indicated by the data structure and pins associated with the trace 235 does not fall below a certain predetermined threshold. Alternatively or additionally, it would be possible to check that the count of bins visited by the trace 235 having cumulative fulfillment ratio below a first predetermined threshold is not larger than a second predetermined threshold.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

For illustration, various aspects have been disclosed in connection with a plurality of datasets that form training data. Similar techniques may be readily employed for a plurality of datasets that form validation data or test data or even inference data (for supervising an inference task provided by a machine-learning algorithm).

For further illustration, various examples have been disclosed for classification tasks. Here, positions of output data points in the output space can take certain discrete values. However, similar techniques as disclosed herein can be readily applied to regression tasks.

**Claims**

1.  A computer-implemented method of enabling assessment of a plurality of datasets forming training data for a machine-learning algorithm, each dataset of the plurality of datasets comprising a respective input datapoint in an input space and an associated output datapoint in an output space, each input data point corresponding to two-dimensional image data acquired using a camera, each output datapoint indicating objects on a railroad track depicted by the respective two-dimensional image data,
    wherein the computer-implemented method comprises:

    - for each dataset of the plurality of datasets:
    determining a respective sequence of a predefined length, the respective sequence including further datasets progressively selected from the plurality of datasets based on a distance of their input datapoints to the input datapoint of the respective dataset,
    - for each dataset of the plurality of datasets:
    determining whether the input datapoint of the respective dataset and the input datapoints of each one of the further datasets included in the respective sequence respectively fulfill a first neighborhood criterion that is defined in the input space,
    - for each dataset of the plurality of datasets:
    determining whether the output datapoint of the respective dataset and the output datapoints of each one of the further datasets included in the respective sequence respectively fulfill a second neighborhood criterion that is defined in the output space,
    - for each dataset of the plurality of datasets and for each sequence entry of the respective sequence: determining a respective cumulative fulfillment ratio based on how many of the further datasets included in the sequence up to the respective entry fulfill both the first neighborhood criterion as well as the second neighborhood criterion, and
    - determining a data structure, an array dimension of the data structure resolving the sequences determined for each one of the plurality of datasets, a further array dimension of the data structure resolving the cumulative fulfillment ratio, each entry of the data structure comprising a count of datapoints that are associated with the respective cumulative fulfillment ratio at the respective sequence entry defined by the position along the array dimension and the further array dimension.

2.  The computer-implemented method of claim 1,
    wherein each entry of the data structure further comprises an identification of the datasets that are associated with the respective cumulative fulfillment ratio at the respective sequence entry defined by the position along the array dimension and the further array dimension.

3.  The computer-implemented method of claim 1 or 2,
    wherein an increment of the array dimension corresponds to a predetermined distance offset in input space between adjacent input datapoints of the respective datasets in the sequences.

4.  A computer-implemented method of assessing training data for training an algorithm, the training data comprising a plurality of datasets, each dataset of the plurality of datasets comprising a respective input datapoint in an input space and an associated output datapoint in an output space, the output datapoints of the plurality of datasets being ground-truth labels indicative of multiple classes to be predicted by the algorithm,
    wherein the method comprises:

    - accessing the data structure determined using the computer-implemented method of any one of the preceding claims,
    - based on said accessing of the data structure, assessing the training data.

5.  The method of claim 4, further comprising:

    wherein said accessing the data structure comprises determining a plot of the data structure, wherein a contrast of plot values of the plot are associated with the count of the datapoints, a first axis of the plot resolving the array dimension, a second axis of the plot resolving the further array dimension,
    wherein the method further comprises:

    - outputting the plot via a user interface.

**EP 4 379 617 B1**

6. The method of claim 5,
   wherein said assessing of the training data comprises:
   identifying a subset of the plurality of datasets by selecting parts of the plot, and

   - presenting datasets in the subset to the user via the user interface.

7. The method of claim 6,
   wherein said presenting of the datasets comprises highlighting (275) the input datapoints or the output datapoints in a reduced-dimensionality plot (270) of the input space or the output space, respectively.

8. The method of any one of claims 5 to 7, further comprising:

   - obtaining a selection of given dataset of the plurality of datasets, and
   - highlighting in the plot the evolution (235) of the respective cumulative fulfillment ratio of the given dataset for various positions along the first axis.

9. The method of any one of claims 4 to 8, further comprising:

   - upon assessing the training data, training the algorithm based on the training data, and
   - upon training the algorithm, using the algorithm for solving inference tasks.

10. A computer-implemented method of supervising inference tasks provided by a machine-learning algorithm, the method comprising:

    - predicting, by the machine-learning algorithm, an inference output datapoint based on an inference input datapoint, the inference input data point corresponding to two-dimensional image data acquired using a camera, the inference output datapoint indicating objects on a railroad track depicted by the respective two-dimensional image data,
    - determining a sequence of a predefined length, the respective sequence including further datasets progressively selected from a plurality of datasets based on a distance of their input datapoints to the inference input datapoint, each input datapoint corresponding to a further image acquired using a camera,
    - determining whether the inference input datapoint and the input datapoints of each one of the further datasets included in the sequence respectively fulfill a first neighborhood criterion that is defined in the input space,
    - determining whether the inference output datapoint and the output datapoints of each one of the further datasets included in the respective sequence respectively fulfill a second neighborhood criterion that is defined in the output space, each output datapoint indicating objects on a railroad track depicted by the respective two-dimensional image data,
    - for each sequence entry of the respective sequence:
    determining a cumulative fulfillment ratio based on how many of the further datasets included in the sequence up to the respective entry fulfill both the first neighborhood criterion as well as the second neighborhood criterion, thereby obtaining a trace of cumulative fulfillment ratios,
    - performing a comparison between the trace of the cumulative fulfillment ratios and the data structure determined in accordance with any one of claims 1 to 5, and
    - based on the comparison, selectively marking the inference output datapoint as reliable or unreliable.

11. The computer-implemented method of claim 10,
    wherein the plurality of datasets form training data based on which the machine-learning algorithm has been trained.

12. A computing device (90) comprising a processor and a memory, the processor being configured to load program code from the memory and execute the program code, wherein the processor is configured to execute the method any one of claims 1 to 4 or the method of claim 10 based on executing the program code.

13. A computer-readable medium storing a data collection comprising the data structure determined in accordance with any one of claims 1 to 4 and the plurality of datasets.

**Patentansprüche**

1. Computerimplementiertes Verfahren zum Ermöglichen einer Bewertung einer Vielzahl von Datensätzen, die Trainingsdaten für einen maschinellen Lernalgorithmus bilden, wobei jeder Datensatz der Vielzahl von Datensätzen einen jeweiligen Eingabedatenpunkt in einem Eingaberaum und einen zugehörigen Ausgabedatenpunkt in einem Ausgaberaum umfasst, wobei jeder Eingabedatenpunkt zweidimensionalen Bilddaten entspricht, die unter Verwendung einer Kamera erfasst wurden, wobei jeder Ausgabedatenpunkt Objekte auf einem Eisenbahngleis angibt, die durch die jeweiligen zweidimensionalen Bilddaten dargestellt werden,
wobei das computerimplementierte Verfahren umfasst:

   - für jeden Datensatz der Vielzahl von Datensätzen:
   Bestimmen einer jeweiligen Sequenz einer vordefinierten Länge, wobei die jeweilige Sequenz weitere Datensätze beinhaltet, die progressiv aus der Vielzahl von Datensätzen basierend auf einem Abstand ihrer Eingabedatenpunkte zu dem Eingabedatenpunkt des jeweiligen Datensatzes ausgewählt werden,
   - für jeden Datensatz der Vielzahl von Datensätzen:
   Bestimmen, ob der Eingabedatenpunkt des jeweiligen Datensatzes und die Eingabedatenpunkte jedes einzelnen der weiteren Datensätze, die in der jeweiligen Sequenz enthalten sind, jeweils ein erstes Nachbarschaftskriterium erfüllen, das in dem Eingaberaum definiert ist,
   - für jeden Datensatz der Vielzahl von Datensätzen:
   Bestimmen, ob der Ausgabedatenpunkt des jeweiligen Datensatzes und die Ausgabedatenpunkte jedes einzelnen der weiteren Datensätze, die in der jeweiligen Sequenz enthalten sind, jeweils ein zweites Nachbarschaftskriterium erfüllen, das in dem Ausgaberaum definiert ist,
   - für jeden Datensatz der Vielzahl von Datensätzen und für jeden Sequenzeintrag der jeweiligen Sequenz:
   Bestimmen einer jeweiligen kumulativen Erfüllungsquote basierend darauf, wie viele der weiteren Datensätze, die in der Sequenz bis zu dem jeweiligen Eintrag enthalten sind, sowohl das erste Nachbarschaftskriterium als auch das zweite Nachbarschaftskriterium erfüllen, und
   - Bestimmen einer Datenstruktur, wobei eine Array-Dimension der Datenstruktur die für jeden einzelnen der Vielzahl von Datensätzen bestimmten Sequenzen auflöst, wobei eine weitere Array-Dimension der Datenstruktur die kumulative Erfüllungsquote auflöst, wobei jeder Eintrag der Datenstruktur eine Anzahl von Datenpunkten umfasst, die der jeweiligen kumulativen Erfüllungsquote an dem jeweiligen Sequenzeintrag zugeordnet sind, der durch die Position entlang der Array-Dimension und der weiteren Array-Dimension definiert ist.

2. Computerimplementiertes Verfahren nach Anspruch 1,
wobei jeder Eintrag der Datenstruktur ferner eine Identifikation der Datensätze umfasst, die der jeweiligen kumulativen Erfüllungsquote an dem jeweiligen Sequenzeintrag zugeordnet sind, der durch die Position entlang der Array-Dimension und der weiteren Array-Dimension definiert ist.

3. Computerimplementiertes Verfahren nach Anspruch 1 oder 2,
wobei ein Inkrement der Array-Dimension einem vorbestimmten Abstandsversatz im Eingaberaum zwischen benachbarten Eingabedatenpunkten der jeweiligen Datensätze in den Sequenzen entspricht.

4. Computerimplementiertes Verfahren zum Bewerten von Trainingsdaten zum Trainieren eines Algorithmus, wobei die Trainingsdaten eine Vielzahl von Datensätzen umfassen, wobei jeder Datensatz der Vielzahl von Datensätzen einen jeweiligen Eingabedatenpunkt in einem Eingaberaum und einen zugehörigen Ausgabedatenpunkt in einem Ausgaberaum umfasst, wobei die Ausgabedatenpunkte der Vielzahl von Datensätzen Ground-Truth-Labels sind, die mehrere Klassen angeben, die durch den Algorithmus vorhergesagt werden sollen,
wobei das Verfahren umfasst:

   - Zugreifen auf die Datenstruktur, die unter Verwendung des computerimplementierten Verfahrens nach einem der vorhergehenden Ansprüche bestimmt wurde,
   - basierend auf besagtem Zugreifen auf die Datenstruktur, Bewerten der Trainingsdaten.

5. Verfahren nach Anspruch 4, ferner umfassend:

   wobei besagtes Zugreifen auf die Datenstruktur das Bestimmen eines Diagramms der Datenstruktur umfasst, wobei ein Kontrast von Diagrammwerten des Diagramms der Anzahl der Datenpunkte zugeordnet ist, wobei eine erste Achse des Diagramms die Array-Dimension auflöst, wobei eine zweite Achse des Diagramms die weitere Array-Dimension auflöst,

wobei das Verfahren ferner umfasst:

- Ausgeben des Diagramms über eine Benutzerschnittstelle.

6. Verfahren nach Anspruch 5,
wobei besagtes Bewerten der Trainingsdaten umfasst: Identifizieren einer Teilmenge der Vielzahl von Datensätzen durch Auswählen von Teilen des Diagramms, und

- Präsentieren von Datensätzen in der Teilmenge an den Benutzer über die Benutzerschnittstelle.

7. Verfahren nach Anspruch 6,
wobei besagtes Präsentieren der Datensätze das Hervorheben (275) der Eingabedatenpunkte oder der Ausgabedatenpunkte in einem reduziert-dimensionalen Diagramm (270) des Eingaberaums bzw. des Ausgaberaums umfasst.

8. Verfahren nach einem der Ansprüche 5 bis 7, ferner umfassend:

- Erlangen einer Auswahl eines gegebenen Datensatzes der Vielzahl von Datensätzen, und
- Hervorheben in dem Diagramm der Entwicklung (235) der jeweiligen kumulativen Erfüllungsquote des gegebenen Datensatzes für verschiedene Positionen entlang der ersten Achse.

9. Verfahren nach einem der Ansprüche 4 bis 8, ferner umfassend:

- nach dem Bewerten der Trainingsdaten, Trainieren des Algorithmus basierend auf den Trainingsdaten, und
- nach dem Trainieren des Algorithmus, Verwenden des Algorithmus zum Lösen von Inferenzaufgaben.

10. Computerimplementiertes Verfahren zum Überwachen von Inferenzaufgaben, die durch einen maschinellen Lernalgorithmus bereitgestellt werden, wobei das Verfahren umfasst:

- Vorhersagen, durch den maschinellen Lernalgorithmus, eines Inferenz-Ausgabedatenpunkts basierend auf einem Inferenz-Eingabedatenpunkt, wobei der Inferenz-Eingabedatenpunkt zweidimensionalen Bilddaten entspricht, die unter Verwendung einer Kamera erfasst wurden, wobei der Inferenz-Ausgabedatenpunkt Objekte auf einem Eisenbahngleis angibt, die durch die jeweiligen zweidimensionalen Bilddaten dargestellt werden,
- Bestimmen einer Sequenz einer vordefinierten Länge, wobei die jeweilige Sequenz weitere Datensätze beinhaltet, die progressiv aus einer Vielzahl von Datensätzen basierend auf einem Abstand ihrer Eingabedatenpunkte zu dem Inferenz-Eingabedatenpunkt ausgewählt werden, wobei jeder Eingabedatenpunkt einem weiteren Bild entspricht, das unter Verwendung einer Kamera erfasst wurde,
- Bestimmen, ob der Inferenz-Eingabedatenpunkt und die Eingabedatenpunkte jedes einzelnen der weiteren Datensätze, die in der Sequenz enthalten sind, jeweils ein erstes Nachbarschaftskriterium erfüllen, das in dem Eingaberaum definiert ist,
- Bestimmen, ob der Inferenz-Ausgabedatenpunkt und die Ausgabedatenpunkte jedes einzelnen der weiteren Datensätze, die in der jeweiligen Sequenz enthalten sind, jeweils ein zweites Nachbarschaftskriterium erfüllen, das in dem Ausgaberaum definiert ist, wobei jeder Ausgabedatenpunkt Objekte auf einem Eisenbahngleis angibt, die durch die jeweiligen zweidimensionalen Bilddaten dargestellt werden,
- für jeden Sequenzeintrag der jeweiligen Sequenz:
Bestimmen einer kumulativen Erfüllungsquote basierend darauf, wie viele der weiteren Datensätze, die in der Sequenz bis zu dem jeweiligen Eintrag enthalten sind, sowohl das erste Nachbarschaftskriterium als auch das zweite Nachbarschaftskriterium erfüllen, wodurch ein Verlauf von kumulativen Erfüllungsquoten erlangt wird,
- Durchführen eines Vergleichs zwischen dem Verlauf der kumulativen Erfüllungsquoten und der Datenstruktur, die gemäß einem der Ansprüche 1 bis 5 bestimmt wurde, und
- basierend auf dem Vergleich, selektives Markieren des Inferenz-Ausgabedatenpunkts als zuverlässig oder unzuverlässig.

11. Computerimplementiertes Verfahren nach Anspruch 10,
wobei die Vielzahl von Datensätzen Trainingsdaten bilden, basierend auf denen der maschinelle Lernalgorithmus trainiert wurde.

12. Rechenvorrichtung (90), umfassend einen Prozessor und einen Speicher, wobei der Prozessor ausgelegt ist, Programmcode aus dem Speicher zu laden und den Programmcode auszuführen, wobei der Prozessor ausgelegt ist, das Verfahren nach einem der Ansprüche 1 bis 4 oder das Verfahren nach Anspruch 10 basierend auf dem Ausführen des Programmcodes auszuführen.

**13.** Computerlesbares Medium, das eine Datensammlung speichert, die die Datenstruktur umfasst, die gemäß einem der Ansprüche 1 bis 4 bestimmt wurde, und die Vielzahl von Datensätzen.

**Revendications**

**1.** Un procédé mis en œuvre par ordinateur permettant d'évaluer une pluralité d'ensembles de données formant des données d'entraînement d'un algorithme d'apprentissage par machine, chaque ensemble de données de la pluralité d'ensembles de données comprenant un point de données d'entrée respectif dans un espace d'entrée et un point de données de sortie associé dans un espace de sortie, chaque point de données d'entrée correspondant à une donnée d'image en deux dimensions acquise en utilisant une caméra, chaque point de données de sortie indiquant des objets sur une piste de chemin de fer dépeints par les données d'image respectives en deux dimensions, dans lequel le procédé mis en œuvre par ordinateur comprend :

- pour chaque ensemble de données de la pluralité d'ensembles de données :
déterminer une séquence respective d'une longueur définie à l'avance, la séquence respective comprenant d'autres ensembles de données sélectionnés progressivement parmi la pluralité d'ensembles de données sur la base d'une distance de leurs points de données d'entrée au point de données d'entrée de l'ensemble de données respectif,
- pour chaque ensemble de données de la pluralité d'ensembles de données :
déterminer si le point de données d'entrée de l'ensemble de données respectif et les points de données d'entrée de chacun des autres ensembles de données inclus dans la séquence respective satisfont respectivement un premier critère de voisinage, qui est défini dans l'espace d'entrée,
- pour chaque ensemble de données de la pluralité d'ensembles de données :
déterminer si le point de données de sortie de l'ensemble de données respectif et les points de données de sortie de chacun des autres ensembles de données inclus dans la séquence respective satisfont respectivement un deuxième critère de voisinage, qui est défini dans l'espace de sortie,
- pour chaque ensemble de données de la pluralité d'ensembles de données pour chaque entrée de séquence de la séquence respective : déterminer un rapport de satisfaction cumulatif respectif sur la base de combien des autres ensembles de données inclus dans la séquence jusqu'à l'entrée respective satisfont à la fois le premier critère de voisinage et le deuxième critère de voisinage, et
- déterminer une structure de données, une dimension de réseau de la structure de données résolvant les séquences déterminées pour chacun de la pluralité d'ensembles de données, une autre dimension de réseau de la structure de données résolvant le rapport de satisfaction cumulatif, chaque entrée de la structure de données comprenant un compte de points de données, qui sont associés au rapport de satisfaction cumulatif respectif à l'entrée respective de séquence définie par la position le long de la dimension du réseau et de l'autre dimension du réseau.

**2.** Le procédé mis en œuvre par ordinateur de la revendication 1, dans lequel chaque entrée de la structure de données comprend en outre une identification des bases de données, qui sont associées au rapport de satisfaction cumulatif respectif à l'entrée de séquence respective définie par la position suivant la dimension du réseau et l'autre dimension du réseau.

**3.** Le procédé mis en œuvre par ordinateur de la revendication 1 ou 2, dans lequel un incrément de la dimension du réseau correspond à un écart de distance déterminé à l'avance dans l'espace d'entrée entre les points de données d'entrée voisins des ensembles de données respectifs dans les séquences.

**4.** Un procédé mis en œuvre par ordinateur pour évaluer des données d'entraînement d'un algorithme, les données d'entraînement comprenant une pluralité d'ensembles de données, chaque ensemble de données de la pluralité d'ensembles de données comprenant un point de données d'entrée respectif dans un espace d'entrée et un point de données de sortie associé dans un espace de sortie, les points de données de sortie de la pluralité d'ensembles de données étant des étiquettes de vérité de terrain indiquant de multiples classes à prévoir par l'algorithme, dans lequel le procédé comprend :

- accéder à la structure de données déterminée en utilisant le procédé mis en œuvre par ordinateur de l'une quelconque des revendications précédentes,
- sur la base dudit accès à la structure de données, évaluer les données d'entraînement.

5. Le procédé de la revendication 4, comprenant en outre :

dans lequel ledit accès à la structure de données comprend déterminer un tracé de la structure de données, dans lequel un contraste de valeurs du tracé est associé au compte des points de données, un premier axe du tracé résolvant la dimension du réseau, un deuxième axe du tracé résolvant l'autre dimension du réseau,
dans lequel le procédé comprend en outre :

- sortir le tracé par l'intermédiaire d'une interface d'utilisateur.

6. Le procédé de la revendication 5,
dans lequel ladite évaluation des données d'entraînement comprend :
identifier un sous-ensemble de la pluralité d'ensembles de données en sélectionnant des parties du tracé, et

- présenter des ensembles de données dans le sous-ensemble à l'utilisateur par l'intermédiaire de l'interface d'utilisateur.

7. Le procédé de la revendication 6,
dans lequel ladite présentation des ensembles de données comprend mettre en lumière (275) les points de données d'entrée ou les points de données de sortie dans un tracé (270) à dimension réduite de l'espace d'entrée ou de l'espace de sortie respectivement.

8. Le procédé de l'une quelconque des revendications 5 à 7, comprenant en outre :

- obtenir une sélection d'un ensemble de données donné de la pluralité d'ensembles de données, et
- mettre en lumière dans le tracé l'évolution (235) du rapport de satisfaction cumulatif respectif de l'ensemble de données donné pour diverses positions le long du premier axe.

9. Le procédé de l'une quelconque des revendications 4 à 8, comprenant en outre :

- après avoir évalué les données d'entraînement, entraîner l'algorithme sur la base des données d'entraînement, et
- après avoir entraîné l'algorithme, utiliser l'algorithme pour résoudre des tâches d'inférence.

10. Un procédé mis en œuvre par ordinateur de supervision de tâches d'inférence donné par un algorithme d'apprentissage par machine, le procédé comprenant :

- prédire, par l'algorithme d'apprentissage par machine, un point de données de sortie d'inférence sur la base d'un point de données d'entrée d'inférence, le point de données d'entrée d'inférence correspondant aux données d'image en deux dimensions acquises en utilisant une caméra, le point de données de sortie d'inférence indiquant des objets sur une voie de chemin de fer dépeints par les données d'image en deux dimensions respectives,
- déterminer une séquence d'une longueur définie à l'avance, la séquence respective comprenant d'autres ensembles de données sélectionnés progressivement parmi une pluralité d'ensembles de données sur la base d'une distance de leurs points de données d'entrée au point de données d'entrée d'inférence, chaque point de données d'entrée correspondant à une autre image acquise en utilisant une caméra,
- déterminer si le point de données d'entrée d'inférence et les points de données d'entrée de chacun des autres ensembles de données inclus dans la séquence satisfont respectivement un premier critère de voisinage, qui est défini dans l'espace d'entrée,
- déterminer si le point de données de sortie d'inférence et les points de données de sortie de chacun des autres ensembles de données inclus dans la séquence respective satisfont respectivement un deuxième critère de voisinage, qui est défini dans l'espace de sortie, chaque point de données de sortie indiquant des objets sur une voie de chemin de fer dépeints par les données d'image en deux dimensions respectives,
- pour chaque entrée de séquence de la séquence respective :
déterminer un rapport de satisfaction cumulatif reposant sur combien des autres ensembles de données inclus dans la séquence jusqu'à l'entrée respective satisfont à la fois le premier critère de voisinage et le deuxième critère de voisinage, en obtenant ainsi une trace de rapport de satisfaction cumulatif,
- effectuer une comparaison entre la trace des rapports de satisfaction cumulatifs et la structure de données déterminée suivant l'une quelconque des revendications 1 à 5, et
- sur la base de la comparaison, marquer sélectivement le point de données de sortie d'inférence comme fiable ou non fiable.

11. Le procédé mis en œuvre par ordinateur de la revendication 10,
dans lequel la pluralité d'ensembles de données forme des données d'entraînement, sur la base desquelles l'algorithme d'apprentissage par machine a été entraîné.

12. Un dispositif (90) informatique comprenant un processeur et une mémoire, le processeur étant configuré pour charger un code de programme à partir de la mémoire et exécuter le code de programme, dans lequel le processeur est configuré pour exécuter le procédé suivant l'une quelconque des revendications 1 à 4 ou le procédé de la revendication 10 sur la base de l'exécution du code de programme.

13. Un support exploitable par ordinateur mettant en mémoire une connexion de données comprenant la structure de données déterminée suivant l'une quelconque des revendications 1 à 4 et la pluralité d'ensembles de données.

FIG 1

FIG 2

## FIG 3

# FIG 4

# FIG 5

FIG 6

FIG 7

FIG 8

FIG 9

FIG 10

FIG 11

FIG 12

FIG 13

EP 4 379 617 B1

FIG 14

280

230

EP 4 379 617 B1

FIG 15

## FIG 16

270

230

## FIG 17

270

230

## FIG 18

270

355    230

## FIG 19

270

230

235

## FIG 20

270

230

235

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 114936528 A

### Non-patent literature cited in the description

- **WASCHULZIK, THOMAS**. Qualitätsgesicherte effiziente Entwicklung vorwärtsgerichteter künstlicher Neuronaler Netze mit uberwachtem Lernen: (QUEEN). 1999